# FASCICULE DE BREVET EUROPEEN

(11) **EP 0 535 702 B1**
(45) Date de publication et mention de la délivrance du brevet: **23.11.1994**
(21) Numéro de dépôt: 92116916.5
(22) Date de dépôt: 02.10.1992
(51) Int. Cl.: F16D 13/58

(54) **Embrayage à diaphragme notamment pour véhicules automobiles**
Tellerfederkupplung, insbesondere für Kraftfahrzeuge
Diaphragm spring clutch, especially for automotive vehicles

(30) Priorité: 02.10.1991 FR 9112111
(43) Date de publication de la demande: 07.04.1993
(73) Titulaire: VALEO, 75848 Paris Cédex 17 (FR)
(72) Inventeur: Thirion de Briel, Jacques, F-92300 Levallois Perret (FR); Dalbiez, André, F-95100 Argenteuil (FR)
(74) Mandataire: Gamonal, Didier

(56) Documents cités:
- DE-A- 4 013 186
- FR-A- 2 585 424
- GB-A- 2 186 039
- US-A- 4 949 829

## Description

La présente invention concerne les mécanismes d'embrayage à diaphragme, notamment pour véhicules automobiles, du genre comportant un couvercle, un diaphragme, qui présente une partie périphérique formant rondelle Belleville et une partie centrale fragmentée en doigts radiaux, des moyens d'assemblage assujettissant de manière pivotante ledit diaphragme audit couvercle, et au moins un plateau de pression, oui est solidaire en rotation du couvercle tout en étant mobile axialement par rapport à celui-ci et sur lequel porte le diaphragme par sa partie périphérique.

Par son couvercle, un tel mécanisme d'embrayage est adapté à être rapporté sur un plateau de réaction ou volant, calé en rotation sur un premier arbre, avec insertion, entre ce plateau de réaction et le plateau de pression, d'un disque de friction solidaire en rotation d'un deuxième arbre, tandis que, autour de celui-ci, est disposée une pièce, dite butée de débrayage, apte à agir sur l'extrémité des doigts radiaux du diaphragme, pour commande en dégagement de l'embrayage ainsi formé, qui est normalement engagé, le plateau de pression serrant le disque de friction contre le plateau de réaction sous la sollicitation du diaphragme.

Un tel mécanisme d'embrayage est décrit dans les documents FR-A-2 585 424 et US-A-4 751 991, conformes au préambule de la revendication 1. Dans ceux-ci, lesdits moyens d'assemblage comportent, d'une part, une pièce annulaire, dite couronne-jonc, de forme tronconique, du côté du diaphragme opposé au couvercle, et d'autre part, des pattes de retenue, relativement minces et plates qui, d'un seul tenant avec le couvercle, traversent axialement, par une partie axiale, le diaphragme ainsi que la couronne-jonc et forment à leur extrémité un coude de calage, la couronne-jonc prenant appui axialement sur ledit coude de calage. Pour ce faire l'extrémité des pattes de retenue est pliée globalement radialement en direction opposée à l'axe de l'ensemble, lesdites pattes étant relativement minces radialement et relativement allongées circonférentiellement. Le diaphragme est ainsi monté pivotant, avec serrage élastique, entre un appui primaire porté par le couvercle et un appui secondaire porté par la couronne-jonc en regard de l'appui primaire.

Pour l'assemblage d'un tel mécanisme, il faut, après empilage axial du diaphragme et de la couronne-jonc sur l'extrémité de pattes de retenue droite, parallèlement à l'axe de l'ensemble, plier ladite extrémité des pattes de retenue, pour constitution du coude de calage que doivent former celles-ci.

Pour cette raison on a prévu une saignée qui en réduit localement l'épaisseur.

Cette disposition donne satisfaction, néanmoins dans certains cas la couronne-jonc peut accidentellement se positionner dans une ou plusieurs saignées.

Il en résulte, après pliage et formation du coude de calage, un encastrement, ladite couronne n'ayant pas toute la liberté de mouvement souhaitée pour permettre un pivotement aisé du diaphragme.

En outre, il en découle un serrage important du diaphragme entre ses appuie primaire et secondaire.

Ce serrage génère des frottements parasites lors du pivotement du diaphragme, avec si nécessaire déformation de certaines pattes de retenue pour permettre une variation d'epaisseur entre les appuie primaire et secondaire lorsque le diaphragme pivote.

La portée qu'offre ladite couronne au diaphragme peut être diminuée.

Il en découle ainsi une répartition de pression non uniforme au niveau du diaphragme, la couronne-jonc s'encastrant par exemple dans certaines saignées et pas dans d'autres.

Pour pallier ces inconvénients on peut songer, de manière coûteuse, à changer de technologie et de mode d'assemblage en modifiant par exemple le couvercle.

Cela conduit à perdre les avantages procurés par la configuration spécifique du couvercle. On peut également songer à une solution du type de celle décrite dans le document GB-A-2 186 039 avec un jonc formant l'appui primaire, mais cela revient à perdre le bénéfice de la présence d'une couronne-jonc dotée d'une portion tronconique.

La présente invention a pour objet de pallier ces inconvénients de manière simple et économique et donc de créer une disposition permettant d'éviter un encastrement de la couronne-jonc, tout en diminuant la charge axiale de serrage appliquée au diaphragme, en offrant une meilleure portée pour celui-ci et en continuant à bénéficier des avantages d'un couvercle à pattes de retenue.

Suivant l'invention, la couronne-jonc est intercalée axialement entre le diaphragme et une couronne de support engagée sur la partie axiale des pattes de retenue et calée sur le coude de calage et en ce que ladite couronne de support est de hauteur supérieure à l'extrémité repliée des pattes de retenue, en sorte qu'elle constitue un outil encaissant l'effort de pliage des pattes.

Grâce à l'invention, cette couronne de support permet d'encaisser les efforts de pliage des pattes et minimise les déformations de la couronne-jonc, avec une meilleure répartition des pressions.

Ainsi, on maîtrise mieux la charge appliquée au diaphragme et la portée qu'offre la couronne-jonc au diaphragme est mieux répartie. La raideur de la couronne-jonc peut être diminuée, ainsi que les usures notamment du diaphragme et de ses appuis.

On diminue également l'angle d'inclinaison de la couronne-jonc par rapport à l'extrémité pliée des pattes.

On peut choisir, grâce à cela, la couronne-jonc de telle manière que la variation d'épaisseur du diaphragme, lors de son pivotement, engendre une faible variation de serrage du diaphragme.

Il suffit qu'à la position embrayage engagé corresponde globalement à un point maximum de la courbe caractéristique de la couronne-jonc, globalement en forme de sinusoïde.

On appréciera que, grâce à la couronne de support, il n'y a pas besoin de soutenir les pattes lors de leur pliage.

En effet, on peut songer à adapter une technologie voisine de celle divulguée dans le document US 4,109,368.

Dans ce brevet les pattes sont roulées autour du jonc (figure 2) et il faut maintenir radialement intérieurement les pattes lors de cette opération à l'aide d'un outil.

Tel n'est pas le cas dans la présente invention, ladite couronne de support permettant d'encaisser les efforts lors du pliage des pattes.

Si désiré, cette couronne de support peut être conformée à sa périphérie interne pour permettre un pliage des pattes, sans nécessité de former sur celle-ci des saignées ou autres.

Par exemple, lors de l'assemblage, on peut maintenir fixe la couronne de support et plier les pattes, ladite couronne ayant pour ce faire un alésage interne arrondi.

Dans tous les cas les pattes de pliage sont déformées au voisinage de la couronne de support en sorte que les interférences entre les pattes de retenue et la couronne-jonc ne soient pas à craindre, ladite couronne-jonc pouvant aisément pivoter lors de la manoeuvre du diaphragme.

Cette couronne de support peut également servir de moyens élastiques de compensation pour aplanir la courbe caractéristique du diaphragme (présentant également une allure globalement sinusoïdale) et réduire les efforts de débrayage pour le conducteur.

On appréciera, par rapport aux dispositions divulguées dans le document DE-A-40 13 186, que l'on réduit le nombre de pièces (voir figure 12) ou que l'on simplifie les pièces (figures 4 à 7). Ainsi, par exemple à la figure 6 de ce document, la pièce 23 n'est pas adaptée à servir de support à un appui secondaire.

Cette couronne de support peut être conformée pour centrer la couronne-jonc et/ou pour venir s'engréner avec les pattes de retenue.

Suivant une caractéristique, la couronne de support peut être de forme tronconique. Ainsi, lors du pliage des pattes autour de la rondelle de support, la partie axiale des pattes est déformée et se creuse légèrement en sorte que le jeu radial existant avant pliage des pattes de retenue, entre les pattes de retenue et la couronne-jonc, augmente après pliage desdites pattes. Il en résulte aucune interférence entre les pattes et la couronne-jonc.

Il en est de même, dans une moindre mesure lorsque la couronne de support est plane. Dans ces cas on peut, si désiré, augmenter le jeu de montage de la couronne-jonc, celle-ci étant montée sur la partie axiale des pattes de retenue, avec un jeu de montage supérieur à celui avec lequel la couronne de support est montée sur ladite partie axiale.

Il peut en être de même lorsque la couronne de support est de forme tronconique.

Dans tous les cas, le couvercle est globalement conservé, ainsi que le diaphragme, la longueur des pattes de retenue étant si nécessaire augmentée.

La couronne de support peut avoir encore une fonction supplémentaire, à savoir de limitation du mouvement de la couronne-jonc.

Ainsi, le diaphragme peut être appliqué, contre l'appui primaire du couvercle avec une charge élastique de serrage, soit constamment ou non.

Les objets de la présente invention, leurs caractéristiques et leurs avantages, ressortiront d'ailleurs de la description qui va suivre, à titre d'exemple, en référence aux dessins schématiques annexés sur lesquels :
- la figure 1 est une vue partielle en élévation, avec un arrachement local, d'un mécanisme d'embrayage à diaphragme suivant l'invention ;
- la figure 2 est une vue en coupe axiale, selon la ligne 2,2 de la figure 1, du seul couvercle mis en oeuvre dans ce mécanisme d'embrayage à diaphragme, avant assemblage de celui-ci ;
- la figure 3 reprend, à échelle supérieure, le détail de la figure 2 repéré par un encart 3 sur celle-ci et se rapporte à une patte de retenue vue en coupe axiale, avant pliage de son extrémité ;
- la figure 4 est une demi-vue en coupe axiale d'un mécanisme d'embrayage équipé d'une rondelle de support selon l'invention ;
- la figure 5 est une vue en coupe axiale montrant des moyens d'assemblage pour un deuxième exemple de réalisation ;
- les figures 6, 9 et 10 sont des vues analogues à la figure 5 respectivement pour un troisième, quatrième et cinquième exemples de réalisation ;
- la figure 7 est une vue montrant la courbe caractéristique de la couronne-jonc ;
- la figure 8 est une vue montrant la courbe caractéristique du diaphragme pour l'exemple de réalisation de la figure 6 ;
- la figure 11 est une vue schématique montrant l'inclinaison du diaphragme lors de l'opération de dégagement de l'embrayage (débrayage).

Sur ces figures, le mécanisme d'embrayage à diaphragme auquel est appliquée l'invention comporte une première pièce globalement annulaire 10, dite couvercle, une deuxième pièce globalement annulaire 11, dite diaphragme, qui présente une partie périphérique 12 formant rondelle Belleville et une partie centrale fragmentée en doigts radiaux 13, des moyens d'assemblage assujettissant de manière pivotante le diaphragme 11 au couvercle 10 et au moins une troisième pièce annulaire 14, dite plateau de pression, qui est solidaire en rotation du couvercle 10 tout en étant mobile axialement par rapport à celui-ci et sur lequel porte le diaphragme 11 par sa partie rondelle Belleville 12. Le couvercle 10 est creux et entoure ici complètement le plateau de pression 14 en étant en tôle emboutie.

En variante, le couvercle peut entourer partiellement le plateau de pression 14, le couvercle étant alors moins profond, tandis que le plateau de réaction 17, décrit ci-après, est creux.

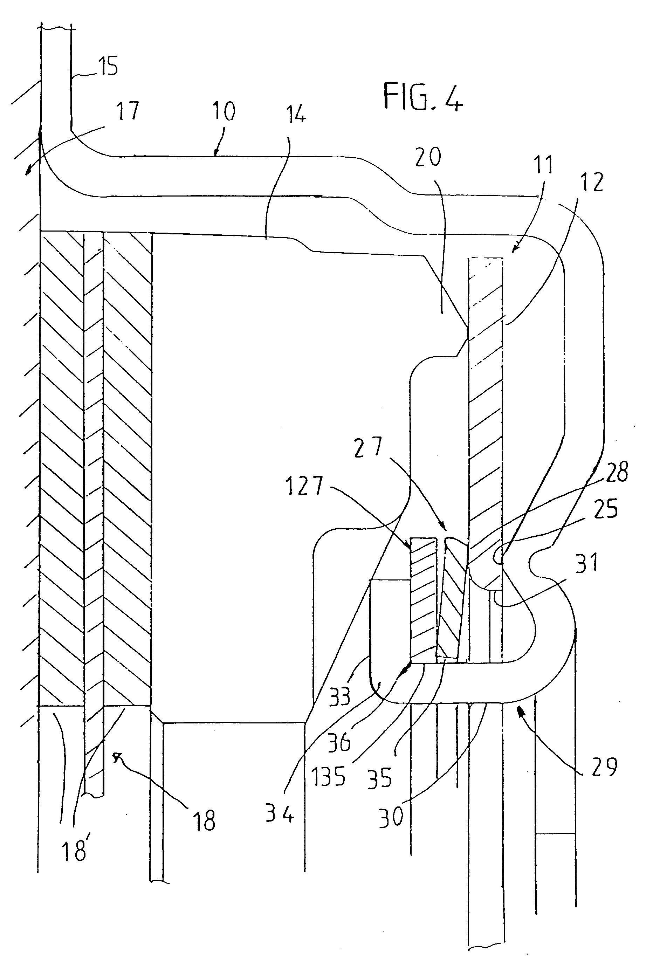

Par des plages 15 d'un rebord radial périphérique 16, le couvercle 10 est adapté à être rapporté à fixation sur un plateau de réaction 17 ou volant, qui est schématisé à la figure 4, et qui est solidaire en rotation d'un premier arbre, ici du vilebrequin du véhicule automobile, avec insertion, entre ce plateau de réaction 17 et le plateau de pression 14, d'un disque de friction 18, qui est également schématisé sur la figure 4 et qui est solidaire en rotation d'un deuxième arbre, ici l'arbre d'entrée de la boîte de vitesses.

Pour action du diaphragme 11, le plateau de pression 14 présente, de place en place, des bossages axiaux 20 sur lesquels porte la périphérie externe de la rondelle Belleville 12 de ce diaphragme 11.

Périphériquement, le plateau 14 présente radialement en saillie, de place en place, des pattes 21 entre lesquelles et des plages 22 du rebord périphérique 16 du couvercle 10 s'étendent, sensiblement tangentiellement à une circonférence de l'ensemble, des languettes 23 assurant sa solidarisation en rotation à ce couvercle 10 tout en en autorisant un déplacement axial, lesdites languettes étant fixées par rivetage.

En variante, on peut prévoir, comme par exemple décrit dans le document US-A-4 892 177 (FR-A-2 628 492), une liaison du type tenon mortaise et l'embrayage peut comporter deux plateaux de pression ou plus.

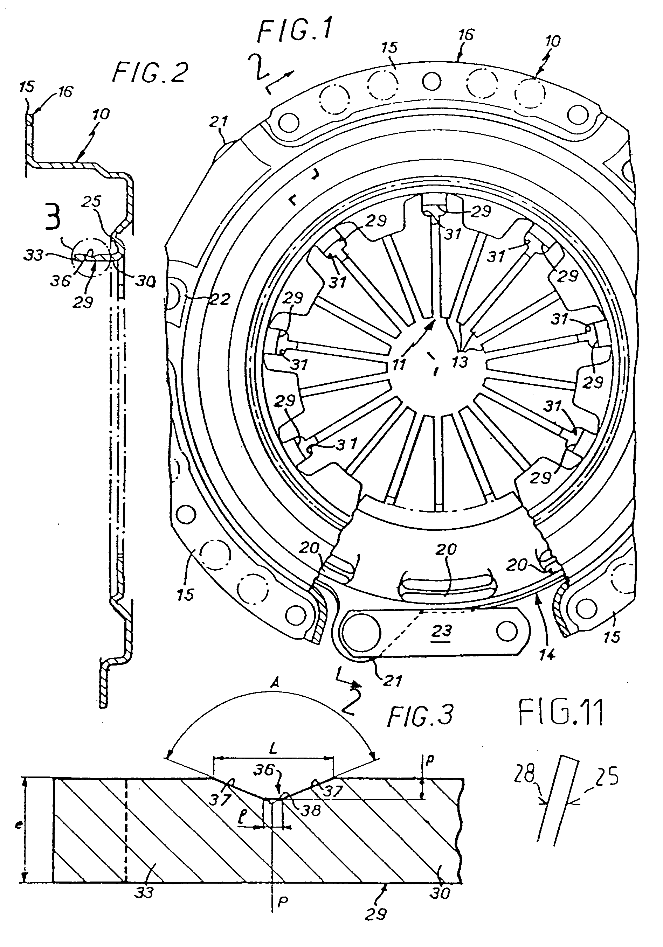

Le couvercle 10 offre un premier appui, ou appui primaire, au diaphragme 11, et plus précisément à la périphérie interne de la rondelle Belleville 12 de celui-ci et il présente ici à cet effet annulairement une déformation en demi-onde formant un premier jonc d'appui 25, figures 2 et 4.

Les moyens d'assemblage assujettissant de manière pivotante le diaphragme 11 au couvercle 10 comportent une quatrième pièce globalement annulaire 27, dite couronne-jonc, du côté du diaphragme 11 opposé au couvercle 10.

Cette couronne-jonc 27 offre au diaphragme 11, en regard de l'appui primaire 25, un deuxième appui, ou appui secondaire, et elle présente ici à cet effet, au droit de la déformation en demi-onde 25 du couvercle 10, un arrondi 28 à sa périphérie externe 3, ladite couronne 27 étant globalement de forme tronconique.

Ces appuis 25, 28 sont donc continus ce qui est favorable à une réduction des usures.

Les moyens d'assemblage assujettissant de manière pivotante le diaphragme 11 au couvercle 10 comportent en outre des pattes de retenue 29, relativement minces et plates, au nombre de neuf dans l'exemple de réalisation représenté, qui, solidaires du couvercle 10, traversent axialement, par une partie droite ou axiale 30, d'une part le diaphragme 11, à la faveur ici d'orifices 31 ménagés dans celui-ci au voisinage de la racine de ses doigts radiaux 13, et d'autre part, la couronne-jonc 27, et qui, au-delà de cette dernière, forment à leur extrémité 33 un coude de calage 34 pour montage de celle-ci, ladite extrémité 33 étant pliée globalement radialement à cet effet en direction opposée à l'axe de l'ensemble.

Ces pattes de retenue 29 sont ici issues d'une seule pièce du couvercle 10, par pliage et découpe appropriés du flanc dans lequel celui-ci est formé, et font donc partie intégrante de ce couvercle 10.

La ligne de pliage des pattes 29 s'étend sensiblement tangentiellement par rapport à une circonférence de l'ensemble. Ces pattes de retenue 29 sont relativement minces radialement et relativement allongées circonférentiellement.

En outre, leur extrémité pliée 33 est sensiblement en équerre par rapport à leur partie droite 30, et elle s'étend globalement radialement en direction opposée à l'axe de l'ensemble.

Initialement, avant assemblage d'un tel mécanisme d'embrayage à diaphragme, et, notamment, avant empilage axial du couvercle 10, du diaphragme 11, et de la couronne-jonc 27, l'extrémité 33 des pattes de retenue 29 est droite, parallèlement à l'axe de l'ensemble, dans le prolongement de la partie 30 à laquelle elle fait suite, figure 3.

Pour formation d'une ligne de pliage, une telle patte de retenue 29 est affectée transversalement d'une saignée 36, qui en réduit localement l'épaissseur.

Une telle saignée 36 a, en section, un profil en trapèze, cette saignée présentant un fond plat 38 entre ses deux flancs latéraux inclinés 37.

De préférence, l'épaisseur de la patte de retenue 29 étant e la largeur L (figure 3) du débouché à l'extérieur de sa saignée 36, est comprise entre e et 1,8 e, la profondeur p de cette saignée est comprise entre 0,15 et 0,30 e, et la largeur 1 du fond de ladite saignée est comprise ente 0,05 e et 0,50 e.

De préférence également, l'angle A fait entre eux par les flancs latéraux 37 de la saignée 36, qui sont symétriques l'un de l'autre par rapport au plan transversal P passant par la zone médiane du fond plat 38, figure 3, est compris entre 90 et 150°.

Une telle saignée 36 peut être assurée, de manière connue en soi, par frappe ou usinage.

Quoi qu'il en soit, avec une telle saignée 36, le pliage des pattes de retenue 29 s'effectue dans d'excellentes conditions et conduit à un coude de calage 34 correctement défini.

La couronne-jonc 27, en forme de rondelle Belleville, est ici toute entière disposée radialement au-delà de la partie axiale 30 des pattes 29 en étant engagée sur ladite partie axiale 30.

Suivant l'invention, un mécanisme d'embrayage du type sus-indiqué est caractérisé en ce que la couronne-jonc 27, 427 est intercalée axialement entre le diaphragme 11 et une couronne de support 127, 227, 327, 527, 627 engagée sur les pattes de retenue et calée sur ledit coude de calage 34, et en ce que ladite couronne de support est de hauteur supérieure à l'extrémité repliée 33 des pattes de retenue 29, en sorte qu'elle constitue un outil encaissant l'effort de pliage des pattes.

Plus précisément, à la figure 4, la couronne de support 127 consiste en une simple rondelle plane disposée toute entière radialement au-delà des pattes de retenue 29.

Dans cette figure, la périphérie interne 135 de cette rondelle est propre à s'engager sur la partie axiale 30 des pattes de retenue 29, avantageusement avec un jeu de montage inférieur à celui de la couronne-jonc 27. L'alésage interne 35 de la couronne-jonc 27 est de taille supérieure à l'alésage interne 135 de la couronne de support 135.

Ainsi, pour assemblage du mécanisme d'embrayage, il faut empiler axialement le diaphragme 11, la couronne-jonc 27 et la couronne de support 127 sur l'extrémité 33 des pattes de retenue 29, parallèlement à l'axe de l'ensemble, puis plier l'extrémité 33 des pattes de retenue 29 au contact de la couronne de support 127 pour constitution du coude de calage que doivent former celles-ci.

Lors de cette opération de pliage, facilitée par les saignées 36, c'est la couronne de support 127 qui encaisse l'effort de pliage des pattes 29 et constitue donc un outil.

En pratique, cette opération de pliage se fait, dans une première étape, à l'aide d'un outil conique puis, dans une deuxième étape, à l'aide d'un autre outil pour finir de replier totalement l'extrémité 33 des pattes de retenue 29.

En variante, on peut utiliser un même outil engagé initialemement à l'intérieur des pattes. Dans un premier mouvement, on replie radialement les pattes en donnant un mouvement radial à l'outil, puis, dans un deuxième mouvement, on déplace axialement l'outil pour plier totalement les pattes. La couronne 127 encaisse alors les efforts, les pattes étant pliées au contact de ladit couronne 127.

Dans les deux cas, lors de cette opération de pliage, la couronne-jonc 27 est comprimée en étant mise à la bonne côte, mais n'est pas admise à venir en contact avec l'extrémité 33 des pattes 29, en sorte qu'aucun encastrement de ladite couronne 27 n'est à craindre.

Grâce au jeu de montage aucune interférence avec la partie droite 30 des pattes 29 n'est à craindre. On notera que ce jeu de montage peut être identique à celui de la couronne 127 du fait que le pliage des pattes 29 est supporté par la couronne 127 ce qui augmente le jeu radial, après pliage, entre les pattes 29 et la couronne-jonc 27.

En outre, on maîtrise mieux la charge appliquée au diaphragme 11 par ladite couronne 27 et la portée 28 (appui secondaire) qu'offre ladite couronne 27 au diaphragme 11 est bien répartie, la couronne de support constituant donc également une rondelle d'application.

Le diaphragme 11 est donc serré entre ses appuis 25 et 28 avec une charge que l'on maîtrise bien ce qui permet de réduire les usures de ces appuis 25, 28 et du diaphragme 11.

En effet on peut aisément choisir l'épaisseur de la couronne-jonc 27 ainsi que sa conicité pour avoir le serrage voulu du fait que c'est la couronne de support qui encaisse les efforts de pliage.

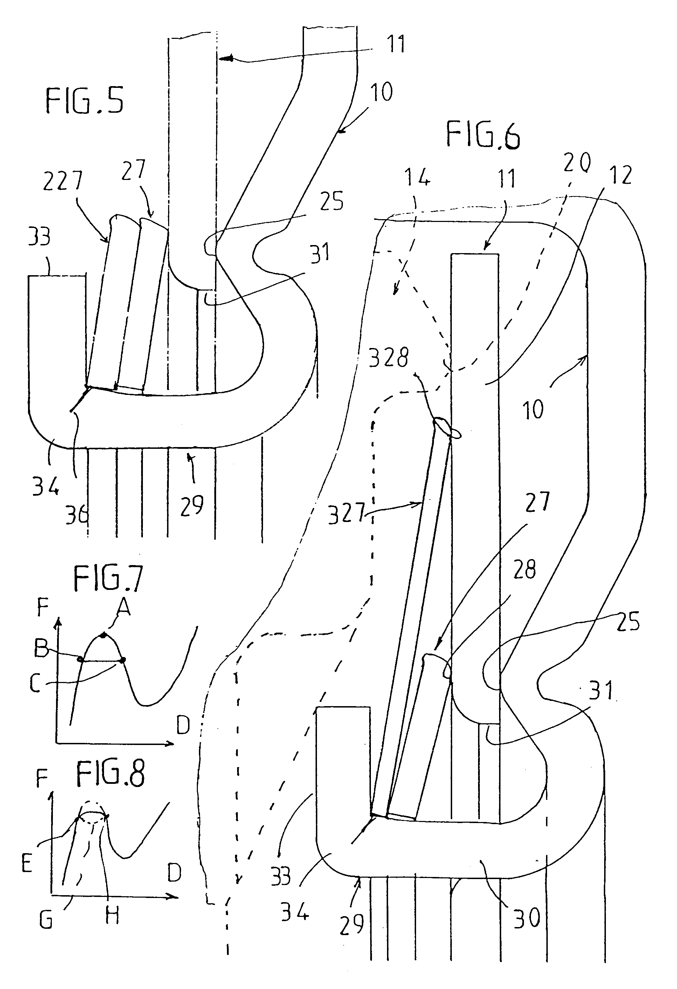

Bien entendu (figures 5 et 6), la couronne de support respectivement 227, 327 peut être de forme tronconique.

Dans ce cas, après pliage, le jeu radial entre la couronne-jonc 27 et la partie axiale 30 des pattes 29 augmente encore en sorte que la couronne de support 227, 327 et la couronne-jonc 27 puissent être enfilées avec le même jeu de montage sur les pattes 29.

En effet, après pliage, la partie droite 30 est légèrement déformée de manière amplifiée et se creuse au voisinage du coude 34, comme montré de manière amplifiée dans les figures 5 et 6.

A la figure 5, la couronne de support 227 est à l'image de la couronne-jonc 27 en étant ici plus épaisse que celle-ci.

A la figure 6, la couronne de support 327 est conformée pour offrir un appui tertiaire 328 au diaphragme 11, cet appui tertiaire 328 étant radialement disposé entre les appuis primaires 25, 28 et l'appui 20 qu'offre le plateau de pression 14 au diaphragme 11.

Ainsi qu'on l'aura compris et qu'il ressort à l'évidence de la description, on peut choisir la couronne tronconique 27, et notamment déterminer son épaisseur et sa conicité, pour qu'en position embrayage engagé avec un disque de friction neuf (point C de la figure 7 avec en abscisse D la déflection ou déplacement et en ordonnée F la force exercée) la charge appliquée par la couronne-jonc 27 au diaphragme soit voisine du point A (figure 7) de la courbe caractéristique de ladite couronne-jonc 27 en sorte que lors du pivotement du diaphragme, pour désengagement de l'embrayage, cette charge appliquée ne varie pratiquement pas. Ce point A correspond au sommet de la courbe caractéristique de la couronne 27 globalement en forme de sinusoïde et qui est ici celle d'une rondelle Belleville.

Pour mémoire (figure 11), lorsque le diaphragme pivote lors de l'opération de débrayage, la distance augmente entre les appuis primaire 25 et secondaire 28 et, grâce au choix précédemment effectué, la charge appliquée demeurera sensiblement constante.

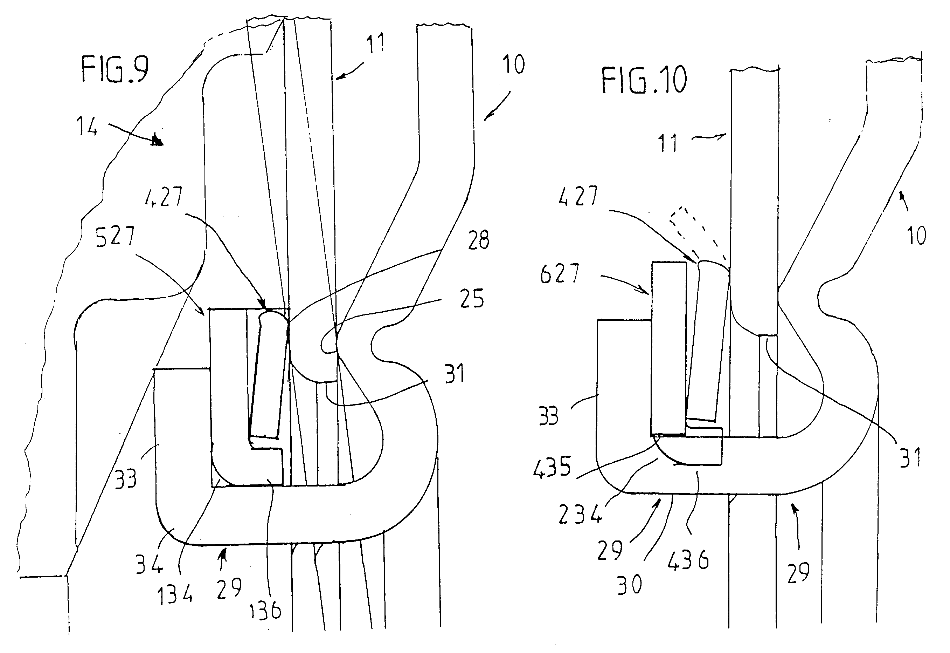

Il en est de même lorsque les garnitures s'usent, le diaphragme occupant alors la position de la figure 9.

Ainsi, grâce au choix, la charge exercée par la couronne-jonc 27 sur le diaphragme fluctuera entre les positions B, embrayage usagé et C, embrayage neuf (figure 7).

Grâce au mode de réalisation de la figure 6 il est possible d'aplanir la courbe caractéristique du diaphragme comme visible à la figure 8.

En effet, cette courbe caractéristique est à l'image de celle de la couronne-jonc 27 avec en abscisse la déflexion ou déplacement (D) et en ordonnée la force exercée (F).

Grâce à la couronne de support 327, en forme de rondelle Belleville, on aplanit cette courbe. En effet, lors de la vie du mécanisme d'embrayages, les garnitures de frottement 18' du disque de friction 18 s'usent en sorte que le plateau de pression 14 se rapproche du plateau de réaction 17 et que le diaphragme s'incline en conséquence. Normalement cette inclinaison a pour effet que la charge appliquée sur le plateau de pression augmente, le diaphragme étant globalement plan et vertical en position embrayage neuf (garnitures 18' neuves) point H sur la courbe puis s'inclinant pour parcourir la courbe des points H à E.

Grâce à la couronne de support 327, choisie en conséquence (courbe G), c'est-à-dire à l'inverse du diaphragme celle-ci contrarie l'action exercée par le diaphragme sur le plateau 14 en sorte que l'on aplanit la courbe caractéristique du diaphragme et que le conducteur, lors de l'opération de débrayage, ait une charge moins importante à exercer au cours de la durée de vie de l'embrayage. La couronne 327 forme donc un moyen élastique de compensation pour aplanir la courbe caractéristique du diaphragme 11.

Cette couronne de support peut être conformée pour centrer la couronne-jonc ainsi, tel que visible à la figure 9, la couronne de support 527 a globalement en section une forme de L avec une partie verticale ou transversale propre à venir en contact avec l'extrémité pliée 33 des pattes et une partie d'orientation axiale 136 tournée vers l'appui primaire 25 du couvercle et donc vers le diaphragme 11 avec formation d'un coude de calage 134.

La partie 136 forme donc un rebord annulaire d'orientation axiale engagé sur la partie axiale des pattes de retenue 29. La couronne-jonc 127, de forme tronconique, s'étend toute entière au-delà dudit rebord axial 136 en ayant la possibilité d'être centrée par celui-ci.

On appréciera que, grâce à cette disposition, on peut se passer des saignées 36. En effet, lors de l'opération de pliage, il est possible de maintenir la couronne de support 127 fixe et de plier les pattes de retenue 29 autour de cette couronne de support 527, le coude de calage 134 favorisant ce pliage.

En variante, on peut prévoir des saignées 36 sur les pattes 29 pour faciliter le pliage.

Bien entendu, cette couronne de support peut s'étendre radialement plus vers l'intérieur, plus particulièrement le rebord axial 436 de la couronne de support 627 (figure 10) peut être échancré pour engréner circonférentiellement avec la partie axiale 30 des pattes de retenue, la périphérie interne 435 de la partie radiale ou transversale de cette couronne de support 627 étant en contact avec la partie axiale 30 des pattes de retenue 29, ladite périphérie 435 s'étendant dans le coude de calage 234. Ainsi, lors de l'opération de pliage, les pattes de retenue 29 sont bien stabilisées, notamment grâce à leur engrènement avec le rebord 436.

Bien entendu, la dimension de l'alésage interne 435 détermine la hauteur du rebord radial 436 venant en prise avec la partie axiale 30 des pattes 29.

Ici, l'alésage 435 est déterminé en sorte que la couronne-jonc 427 puisse être centrée par la périphérie externe du rebord 436, qui s'étend alors radialement au-delà de la partie 30 des pattes 29.

Bien entendu, dans une variante non représentée, le rebord 436 peut venir complètement en prise circonférentiellement avec la partie axiale des pattes (les bords latéraux de celles-ci) et ne pas servir au centrage de la couronne-jonc 427.

En variante, la couronne de support de la figure 4 peut être trouée pour engagement sur les pattes 29 et s'étendre également radialement en deça des pattes 29. De même dans les figures 9 et 10 la partie transversale de la couronne de support peut être prolongée et s'étendre radialement en deça des pattes de retenue.

On appréciera que, dans toutes les figures, la couronne de support est en contact par sa partie transversale avec l'extrémité repliée 33 des pattes 29 en étant de hauteur supérieure à celle-ci et que cette couronne est d'une hauteur telle qu'elle puisse également servir d'appui à la périphérie externe de la couronne-jonc 27, 427.

Ainsi, cette couronne-jonc peut appliquer constamment le diaphragme 11 contre son appui primaire 25, la charge exercée par cette rondelle étant alors supérieure à la charge exercée par la butée de débrayage sur l'extrémité interne des doigts du diaphragme.

Dans le cas où cette relation n'est pas réalisée, la couronne-jonc 427 est admise, lors de l'opération de débrayage, à se déplacer son mouvement étant alors limité par la couronne de support selon l'invention.

Dans tous les cas la levée du plateau de pression est bien maîtrisée.

On voit que grâce à l'invention, on peut bien maîtriser la charge appliquée au diaphragme et ce quelle que soit la valeur de celle-ci.

D'autres exemples de réalisation sont compatibles avec les revendications.

En particulier, l'appui primaire peut être constitué à la faveur d'un jonc porté par le couvercle. De même l'appui secondaire peut être réalisé par un jonc porté par la couronne-jonc. Dans tous les cas l'invention permet de conserver globalement le couvercle de l'embrayage, la dimension axiale de ses pattes 29 étant éventuellement augmentée et ceci n'est pas gênant car la matière prélevée l'est alors dans une partie qui normalement constitue une chute.

L'appui secondaire peut être formé sur la couronne-jonc, à la faveur d'une forme de V peu prononcée comme visible en pointillés à la figure 10.

Enfin la couronne-jonc peut être plus rigide. Elle peut présenter à sa périphérie interne une portion verticale ou transversale pour contact avec la couronnne de support puis une portion élastique tronconique portant l'appui secondaire sous forme d'un arrondi ou d'un V.

## Revendications

1. Mécanisme d'embrayage à diaphragme comportant un couvercle (10), un diaphragme (11), qui présente une partie périphérique (12) formant rondelle Belleville et une partie centrale fragmentée en doigts radiaux (13), des moyens d'assemblage assujettissant de manière pivotante le diaphragme audit couvercle, et au moins un plateau de pression (14), qui est solidaire en rotation du couvercle (10) tout en étant mobile axialement par rapport à celui-ci et sur lequel porte le diaphragme (11) par sa partie périphérique, dans lequel lesdits moyens d'assemblage comportent, d'une part, une couronnne-jonc (27,427) dotée d'une portion tronconique, du côté du diaphragme (11) opposé au couvercle (10), et d'autre part, des pattes de retenue (29), relativement minces radialement et allongées circonférentiellement, qui, d'un seul tenant avec le couvercle (10), traversent axialement, par une partie axiale (30), le diaphragme (11) ainsi que ladite couronne-jonc (27,427) disposée toute entière radialement au-delà de ladite partie axiale (30), et forment à leur extrémité (33) un coude de calage (34), ladite extrémité (33) étant pliée à cet effet globalement radialement en direction opposée à l'axe de l'ensemble, et dans lequel le diaphragme (11) est ainsi monté pivotant entre un appui primaire (25) porté par le couvercle (10) et un appui secondaire (28) porté par la partie tronconique de ladite couronne-jonc, caractérisé en ce que la couronne-jonc (27,427) est intercalée axialement entre le diaphragme (11) et une couronne de support (127,227,327,527,627) engagée sur la partie axiale (30) des pattes de retenue (29) et calée sur le coude de calage (34), et en ce que ladite couronne de support est de hauteur supérieure à l'extrémité (33) repliée des pattes de retenue (29), en sorte qu'elle constitue un outil encaissant l'effort de pliage des pattes.

2. Mécanisme d'embrayage selon la revendication 1, caractérisé en ce que la couronne-jonc (27,427) est montée sur la partie axiale (30) des pattes de retenue (29) avec un jeu de montage supérieur à celui avec lequel la couronne de support (127,227,327,527,627) est montée sur ladite partie axiale.

3. Mécanisme d'embrayage selon la revendication 1 ou 2, caractérisé en ce que l'alésage interne de la couronne-jonc (27,427) est de taille supérieure à l'alésage (21) interne de la couronne de support (127,227,327,527,627).

4. Mécanisme d'embrayage selon l'une quelconque des revendications 1 à 3, caractérisé en ce que la couronne de support s'étend radialement toute entière au-delà de la partie axiale (30) des pattes de retenue (29).

5. Mécanisme d'embrayage selon la revendication 4, caractérisé en ce que la couronne de support (127) est de forme plane.

6. Mécanisme d'embrayage selon la revendication 5, caractérisé en ce que la couronne de support (227,327) est de forme tronconique.

7. Mécanisme d'embrayage selon la revendication 6, caractérisé en ce que la couronne de support (327) est conformée pour offrir un appui tertiaire (328) au diaphragme (11), cet appui tertiaire (328) étant radialement disposé entre les appuis primaires (25,28) et l'appui (20) qu'offre le plateau de pression (14) au diaphragme (11) et en ce que ladite couronne de support (327) est conformée pour former un moyen élastique de compensation afin de contrarier l'action exercée par le diaphragme (11) sur le plateau de pression (14) en sorte d'aplanir la courbe caractéristique du diaphragme (11).

8. Mécanisme d'embrayage selon l'une quelconque des revendications 1 à 3, caractérisé en ce que la couronne de support (527,627) est conformée pour centrer la couronne-jonc (427).

9. Mécanisme d'embrayage selon la revendication 8, caractérisé en ce que la couronne de support (527,627) a globalement une forme de L avec une partie transversale apte à venir en contact avec l'extrémité pliée (33) des pattes de retenue (29) et une partie d'orientation axiale (136,436) tournée vers l'appui primaire (25) du couvercle avec formation d'un coude de calage (134,234) entre lesdites parties axiale et transversale.

10. Mécanisme d'embrayage selon la revendication 9, caractérisé en ce que la couronne-jonc (427) s'étend radialement toute entière au-delà de ladite partie axiale (136).

11. Mécanisme d'embrayage selon la revendication 9, caractérisé en ce que la partie axiale (436) de la couronne de support (627) est échancrée pour engréner avec la partie axiale (30) des pattes de retenue (29).

12. Mécanisme d'embrayage selon la revendication 9, caractérisé en ce que le coude de calage (134,234) de la couronne de support (527,627) sert au pliage des pattes de retenue (29).

13. Mécanisme d'embrayage selon l'une quelconque des revendications 1 à 12, caractérisé en ce que ladite couronne de support est d'une hauteur telle qu'elle puisse également servir d'appui à la périphérie externe de la couronne jonc (27,427).

14. Mécanisme selon l'une quelconque des revendications 1 à 13, caractérisé en ce que ladite couronne de support est plus épaisse que ladite couronne-jonc.

## Claims

1. A diaphragm clutch mechanism comprising a cover plate (10), a diaphragm (11) which has a peripheral portion (12) defining a Belleville ring, together with a central portion divided into radial fingers (13), assembly means pivotally applying the diaphragm to the said cover plate, and at least one pressure plate (14), which is fixed to the cover plate (10) for rotation with it while being movable axially with respect to the latter, and on which the diaphragm (11) bears through its peripheral portion, wherein the said assembly means comprise, firstly, a crown ring (27, 427) having a frustoconical portion on the side of the diaphragm (11) opposite to the cover plate (10), and secondly, retaining lugs (29) which are relatively thin in the radial direction and elongated circumferentially, and which, being integral with the cover plate (10), pass axially, by means of an axial portion (30), through the diaphragm (11) and through the said crown ring (27, 427), which is arranged entirely radially outwardly of the said axial portion (30), the retaining lugs defining at their end (33) a locating bend (34), the said end (33) being bent for this purpose in a generally radial direction away from the axis of the assembly, and wherein the diaphragm (11) is thus mounted for pivoting movement, between a primary abutment (25) carried by the cover plate (10) and a secondary abutment (28) carried by the frustoconical portion of the said crown ring, characterised in that the crown ring (27, 427) is interposed axially between the diaphragm (11) and a support crown (127, 227, 327, 527, 627) which is engaged on the axial portion (30) of the retaining lug (29) and which is located on the locating bend (34), and in that the said support crown is of greater height than the bent back end (33) of the retaining lugs (29), so that it constitutes a tool absorbing the force of bending the lugs.

2. A clutch mechanism according to Claim 1, characterized in that the crown ring (27, 427) is mounted on the axial portion (30) of the retaining lugs (29) with a fitting clearance which is greater than that with which the support crown (127, 227, 327, 527, 627) is mounted on the said axial portion.

3. A clutch mechanism according to Claim 1 or Claim 2, characterized in that the internal bore of the crown ring (27, 427) is larger than the internal bore (21) of the support crown (127, 227, 327, 527, 627).

4. A clutch mechanism according to any one of Claims 1 to 3, characterised in that the support crown extends radially entirely outside the axial portion (30) of the retaining lugs (29).

5. A clutch mechanism according to Claim 4, characterised in that the support crown (127) is flat.

6. A clutch mechanism according to Claim 5, characterised in that the support crown (227, 327) is frustoconical in shape.

7. A clutch mechanism according to Claim 6, characterised in that the support crown (327) is so configured as to offer a tertiary abutment (328) to the diaphragm (11), the said tertiary abutment (328) being radially disposed between the primary abutments (25, 28) and the abutment (20) offered by the pressure plate (14) to the diaphragm (11), and in that the said support crown (327) is so configured as to define a resilient compensating means for opposing the action exerted by the diaphragm (11) on the pressure plate (14), whereby to flatten the characteristic curve of the diaphragm (11).

8. A clutch mechanism according to any one of Claims 1 to 3, characterised in that the support crown (527, 627) is so configured as to centre the crown ring (427).

9. A clutch mechanism according to Claim 8, characterised in that the support crown (527, 627) is generally L-shaped, with a transverse portion adapted to make contact with the bent back end (33) of the retaining lugs (29), together with an axially orientated portion (136, 436) which is directed towards the primary abutment (25) of the cover plate, with a locating bend (134, 234) being defined between the said axial and transverse portions.

10. A clutch mechanism according to Claim 9, characterised in that the crown ring (427) extends entirely radially outwardly of the said axial portion (136).

11. A clutch mechanism according to Claim 9, characterised in that the axial portion (436) of the support crown (627) is slotted so as to mesh with the axial portion (30) of the retaining lugs (29).

12. A clutch mechanism according to Claim 9, chaacterised in that the locating bend (134, 234) of the support crown (527, 627) serves for the bending of the retaining lugs (29).

13. A clutch mechanism according to any one of Claims 1 to 12, characterised in that the said support crown has a height such that it can also serve as an abutment for the outer periphery of the crown ring (27, 427).

14. A mechanism according to any one of Claims 1 to 13, characterised in that the said support crown is thicker than the said crown ring.

## Patentansprüche

1. Tellerfeder-Kupplungsmechanismus, bestehend aus einem Deckel (10), einer Tellerfeder (11) mit einem als Belleville-Feder ausgebildeten Peripherieteil (12) und einem in radiale Finger (13) unterteilten Mittelteil, aus Verbindungsmitteln für die schwenkbare Anbringung der Tellerfeder an dem besagten Deckel und mindestens einer Druckplatte (14), die drehfest mit dem Deckel (10) verbunden und gleichzeitig axial im Verhältnis zu ihm beweglich ist und an der die Tellerfeder (11) mit ihrem Peripherieteil aufliegt, wobei die besagten Verbindungsmittel einerseits einen Ringkranz (27, 427) mit einem kegelstumpfförmigen Abschnitt auf der dem Deckel (10) entgegengesetzten Seite der Tellerfeder (11) und andererseits radial relativ dünne und am Kreisumfang langgestreckte Halteklammern (29) umfassen, die in einstückiger Ausführung mit dem Deckel (10) axial an einem axialen Teil (30) durch die Tellerfeder (11) sowie durch den radial vollständig hinter dem axialen Teil (30) angeordneten Ringkranz (27, 427) hindurchgehen und die an ihrem Ende (33) einen Sicherungsbogen (34) bilden, wozu das besagte Ende (33) insgesamt radial in entgegengesetzter Richtung zur Achse der Einheit umgebogen ist, und wobei die Tellerfeder (11) auf diese Weise schwenkbar zwischen einer am Deckel (10) angebrachten primären Auflage (25) und einer am kegelstumpfförmigen Teil des Ringkranzes angebrachten sekundären Auflage (28) eingebaut ist , **dadurch gekennzeichnet,** daß der Ringkranz (27, 427) axial zwischen der Tellerfeder (11) und einem Tragkranz (127, 227, 327, 527, 627) eingesetzt ist, der am axialen Teil (30) der Halteklammern (29) eingreift und im Sicherungsbogen (34) gesichert ist, und daß der besagte Tragkranz eine größere Höhe als das umgebogene Ende (33) der Halteklammern (29) aufweist, so daß er ein Mittel zur Aufnahme der Biegebeanspruchung der Klammern bildet.

2. Kupplungsmechanismus nach Anspruch 1, **dadurch gekennzeichnet,** daß der Ringkranz (27, 427) auf dem axialen Teil (30) der Halteklammern (29) mit einem Einbauspiel eingebaut ist, das größer als das Spiel ist, mit dem der Tragkranz (127, 227, 327, 527, 627) auf dem besagten axialen Teil eingebaut ist.

3. Kupplungsmechanismus nach Anspruch 1 oder 2, **dadurch gekennzeichnet,** daß die Innenbohrung des Ringkranzes (27, 427) größer als die Innenbohrung (21) des Tragkranzes (127, 227, 327, 527, 627) ist.

4. Kupplungsmechanismus nach einem der Ansprüche 1 bis 3 , **dadurch gekennzeichnet,** daß sich der Tragkranz radial vollständig hinter dem axialen Teil (30) der Halteklammern (29) erstreckt.

5. Kupplungsmechanismus nach Anspruch 4, **dadurch gekennzeichnet,** daß der Tragkranz (127) in flacher Form ausgeführt ist.

6. Kupplungsmechanismus nach Anspruch 5, **dadurch gekennzeichnet,** daß Tragkranz (227, 327) kegelstumpfförmig ausgeführt ist.

7. Kupplungsmechanismus nach Anspruch 6, **dadurch gekennzeichnet,** daß der Tragkranz (327) ausgeformt ist, um eine tertiäre Auflage (328) für die Tellerfeder (11) zu bilden, wobei diese tertiäre Auflage (328) radial zwischen den primaren Auflagen (25, 28) und der Auflage (20) angeordnet ist, welche die Druckplatte (14) für die Tellerfeder (11) bildet, und daß der Tragkranz (327) so ausgeformt ist, daß er ein elastisches Ausgleichmittel bildet, um der durch die Tellerfeder (11) auf die Druckplatte (14) ausgeübten Belastung entgegenzuwirken, so daß die Kennlinie der Tellerfeder (11) abgeflacht wird.

8. Kupplungsmechanismus nach einem der Ansprüche 1 bis 3 , **dadurch gekennzeichnet,** daß der Tragkranz (527, 627) ausgeformt ist, um den Ringkranz (427) zu zentrieren.

9. Kupplungsmechanismus nach Anspruch 8, **dadurch gekennzeichnet,** daß der Tragkranz (527, 627) insgesamt eine L-Form aufweist, mit einem Querteil, der mit dem umgebogenen Ende (33) der Halteklammern (29) in Berührung kommen kann, und einem axial ausgerichteten Teil (136, 436), der zur primären Auflage (25) des Deckels gerichtet ist, wobei ein Sicherungsbogen (134, 234) zwischen dem axialen Teil und dem Querteil gebildet wird.

10. Kupplungsmechanismus nach Anspruch 9, **dadurch gekennzeichnet,** daß sich der Ringkranz (427) radial vollständig hinter dem besagten axialen Teil (136) erstreckt.

11. Kupplungsmechanismus nach Anspruch 9, **dadurch gekennzeichnet,** daß der axiale Teil (436) des Tragkranzes (627) mit einer Aussparung versehen ist, um mit dem axialen Teil (30) der Halteklammern (29) in Eingriff zu treten.

12. Kupplungsmechanismus nach Anspruch 9, **dadurch gekennzeichnet,** daß der Sicherungsbogen (134, 234) des Tragkranzes (527, 627) für das Umbiegen der Halteklammern (29) dient.

13. Kupplungsmechanismus nach einem der Ansprüche 1 bis 12, **dadurch gekennzeichnet,** daß die Höhe des besagten Tragkranzes so bemessen ist, daß er auch als Auflage für die Außenperipherie des Ringkranzes (27, 427) dienen kann.

14. Kupplungsmechanismus nach einem der Ansprüche 1 bis 13, **dadurch gekennzeichnet,** daß der besagte Tragkranz dicker als der besagte Ringkranz ausgeführt ist.
